# EUROPÄISCHE PATENTSCHRIFT

(11) **EP 1 331 407 B1**
(45) Veröffentlichungstag und Bekanntmachung des Hinweises auf die Patenterteilung: **24.05.2006**
(21) Anmeldenummer: 03000785.0
(22) Anmeldetag: 14.01.2003
(51) Int. Cl.: F16B 15/00, F16B 15/04

(54) **Befestigungsmittel und Verfahren zu seiner Herstellung**
Fastening device and its manufacturing method
Dispositif de fixation et son procédé de fabrication

(30) Priorität: 29.01.2002 DE 10203282
(43) Veröffentlichungstag der Anmeldung: 30.07.2003
(73) Patentinhaber: Joh. Friedrich Behrens AG, 22926 Ahrensburg (DE)
(72) Erfinder: Krohn, Burghardt, 22949 Ammersbek (DE)
(74) Vertreter: Hauck, Graalfs, Wehnert, Döring, Siemons

(56) Entgegenhaltungen:
- FR-A- 707 271
- GB-A- 1 407 510
- US-A- 2 153 874
- US-A- 2 376 936
- US-A- 2 641 154

## Beschreibung

Die Erfindung bezieht sich auf ein Befestigungsmittel gemäß dem Oberbegriff des Anspruchs 1 und auf ein Verfahren zu seiner Herstellung. Ein solches Befestigungsmittel ist aus der US 2 641 154 A bekannt.

Befestigungsmittel im Sinne dieser Anmeldung sind insbesondere Klammern. Diese bestehen aus einem zu einem U gebogenen Rund- oder Flachdraht. Es ist bekannt, die Enden der Schenkel mit einem Meißelanschnitt zu versehen, der den Schenkeln einen geraden Verlauf im Material gibt, in das die Klammern eingetrieben werden. Darüber hinaus ist es bekannt, Klammern an den Enden der Schenkel mit einem außermittigen Sägeanschnitt zu versehen. Hierdurch verlaufen die Schenkel der Klammern beim Eintreiben seitlich von der ursprünglichen Schenkelachse und erhöhen dadurch in vielen Materialien die Ausziehwiderstände.

Hergestellt werden die Klammern mit Sägeanschnitt, indem Einzeldrähte an den Enden über eine Kante schräg abgeschert, dann eine Vielzahl Einzeldrähte über einem Formkörper gebogen und gesammelt und anschließend zu einem Stab aus einer Vielzahl Klammern verklebt werden.

Die Klammerstäbe werden mittels Nagelgeräten gesetzt, bei denen es sich vielfach um pneumatisch betriebene "Druckluftnagler" oder um hydraulisch betriebene, gasbetriebene, elektrisch betriebene oder per Hand betriebene und eine Federaufladung aufweisende Nagler handelt.

Die Produktionsgeschwindigkeit der Klammerstäbe ist insbesondere durch die Verarbeitung der Einzeldrähte begrenzt.

Die eingangs genannte US 2 641 154 A offenbart Klammern mit Einkerbungen zum Verankern der Schenkel im Material des Untergrundes. Zum Eintreiben der Klammer in ein inhomogenes Material kann es dazu kommen, daß die Schenkel nicht oder in einer unerwünschten Weise abgelenkt werden, mit nachteiligen Folgen für Eintreib- und Auszugswerte.

Die US 2 376 936 A offenbart Nägel mit Kerben oder Ausnehmungen, die Knickstellen bilden, um die Nägel quer zur Eintreibrichtung zu falten und in einem Untergrund gegen Herausziehen fest zu verankern. Hierzu ist es erforderlich, den Nagel mit seinem Eindringende gegen eine harte Unterlage zu schlagen, da er sonst nicht an den vorbereiteten Stellen umknickt. Die Anwendung dieses Befestigungsmittels ist durch die Notwendigkeit des Schlagens gegen ein hartes Gegenlager begrenzt, das nicht immer anwendbar ist.

Die FR 707 271 A beschreibt eine Klammer mit Schäften, die insgesamt gegenüber der Basis der Klammer abgewinkelt sind. Dies kann beim Eintreiben in einen harten Untergrund dazu führen, daß die beiden Schäfte gegen die Basis gefaltet werden und das Befestigungsmittel nicht in den Untergrund eindringt. Ferner dringen die Schäfte allenfalls gradlinig in den Untergrund ein, so daß die Auszugswerte nur geringfügig gesteigert werden.

Die GB 1 407 510 A betrifft Klammern, deren Schäfte in der Nähe ihrer unteren Enden Abwinklungen aufweisen. In einem Klammerstab sind die Enden benachbarter Klammern abwechselnd nach außen und nach innen abgebogen. Zwei benachbarte Klammern werden gleichzeitig gesetzt. Die gegenläufige Auslenkung soll eine verbesserte Verankerung im Untergrund erzielen. Auch bei diesen Klammern besteht das Problem, daß die Schäfte beim Setzen in einen besonders harten Untergrund abknicken können.

Die US 2 153 874 A offenbart Klammern, deren Schäfte einen stumpfen oder einen spitzen Winkel mit der Basis einschließen und mindestens eine Abwinklung oder Biegung aufweisen. Die Schäfte sind aufgrund der erheblichen Abweichungen von der Eintreibachse besonders knickgefährdet.

Davon ausgehend liegt der Erfindung die Aufgabe zugrunde, ein Befestigungsmittel zur Verfügung zu stellen, das einen beim Eintreiben in ein Material seitlich verlaufenden Schenkel bzw. Schaft aufweist und mit erhöhter Produktivität produziert werden kann. Ferner soll ein Verfahren zur Herstellung des Befestigungsmittels zur Verfügung gestellt werden.

Hinsichtlich des Erzeugnisses wird die Aufgabe durch ein Befestigungsmittel mit den Merkmalen des Anspruches 1 gelöst. Vorteilhafte Ausgestaltungen des Befestigungsmittels sind in den Unteransprüchen angegeben.

Das erfindungsgemäße Befestigungsmittel hat mindestens einen Schaft mit einem in ein Material eintreibbaren Ende und mindestens einem Schaftbereich mit gegenüber den Querschnitten der beiden angrenzenden Schaftbereiche ungleichmäßig geschwächtem Querschnitt.

Überraschenderweise wurde festgestellt, daß das Befestigungsmittel aufgrund der ungleichmäßigen Schwächung des Querschnittes des Schaftbereiches beim Eintreiben im Material seitlich bezüglich der Eintreibachse verläuft. Ungleichmäßige Schwächung bedeutet, daß der Querschnitt des Schaftbereiches auf einer Seite des Schaftes geschwächt ist und auf der gegenüberliegenden Seite nicht oder daß er zu der einen Seite des Schaftes hin stärker geschwächt ist als zu der gegenüberliegenden Seite. Infolgedessen verläuft der Schaft beim Eintreiben in das Material zu der Seite hin, auf der er geschwächt ist bzw. auf der er stärker geschwächt ist. Hierdurch wird die gewünschte Steigerung des Ausziehwiderstandes erreicht. Auch ist es hierdurch möglich, dem Befestigungsmittel einen gewünschten Verlauf in einem Material zu geben, der im Hinblick auf eine spezielle Konstruktion wünschenswert sein kann. Die ungleichmäßige Schwächung des Querschnittes in einem Schaftbereich, an den auf beiden Seiten Schaftbereiche angrenzen, hat produktionstechnische Vorteile gegenüber dem bekannten Sägeanschnitt, der sehr viel höhere Produktionsgeschwindigkeiten und Kostenreduzierungen ermöglicht.

Der Querschnitt kann auf verschiedene Weise ungleichmäßig geschwächt werden. Beispielsweise ist es grundsätzlich möglich, die Festigkeit des Materials in einem Teil des Querschnittes zu verringern, beispielsweise durch eine einseitige thermische Behandlung (durch Hitze oder Kälte) oder eine andere Behandlung, die zu einer Reduzierung der Festigkeit des Materials führt. Gemäß einer bevorzugten Ausgestaltung ist der ungleichmäßig geschwächte Querschnitt ein ungleichmäßig reduzierter Querschnitt.

Der Querschnitt kann wiederum auf verschiedene Weise reduziert sein, beispielsweise durch spanabhebende Bearbeitung. Gemäß einer bevorzugten Ausgestaltung ist der Querschnitt durch Umformen reduziert, insbesondere durch eine Einprägung in nur eine Seite des Schaftes.

Das Befestigungsmittel hat mindestens einen Schaft mit einem in ein Material eintreibbaren Ende und einer Abwinklung.

Überraschenderweise wurde festgestellt, daß das Befestigungsmittel aufgrund der Abwinklung beim Eintreiben im Material seitlich bezüglich der Eintreibachse verläuft. Abwinklung bezeichnet einen Schaftbereich, der einen Winkel mit der Achse durch den angrenzenden Schaftbereich einschließt. Infolgedessen verläuft der Schaft beim Eintreiben in das Material zu der Seite hin, zu der der zuerst eindringende Schaftbereich gegenüber dem nachfolgenden Schaftbereich abgewinkelt ist. Hierdurch wird die gewünschte Steigerung des Ausziehwiderstandes erreicht. Auch ist es hierdurch möglich, dem Befestigungsmittel einen gewünschten Verlauf in einem Material zu geben, der im Hinblick auf eine spezielle Konstruktion wünschenswert sein kann. Befestigungsmittel mit einer Abwinklung sind mit erhöhter Produktivität herstellbar.

Besonders vorteilhaft weist das Befestigungsmittel sowohl einen Schaftbereich mit ungleichmäßig geschwächtem Querschnitt als auch eine Abwinklung auf. Die Abwinklung ist bevorzugt zu der Seite hin gerichtet, auf der sich die Schwächung des Querschnittes befindet. Durch die Abwinklung wird der seitliche Verlauf des Schaftes beim Eintreiben zur Seite der Schwächung des Querschnittes hin vorteilhaft unterstützt.

Gemäß einer Ausgestaltung weist die Abwinklung einen Winkel von 1° bis 7° auf. Gemäß einer weiteren Ausgestaltung weist die Abwinklung einen Winkel von 3° bis 5° auf. Besonders vorteilhaft ist eine Abwinklung von etwa 4°.

Gemäß einer Ausgestaltung geht die Abwinklung von dem Schaftbereich mit ungleichmäßig reduziertem Querschnitt aus. Dies ist besonders vorteilhaft für die Herstellung des ungleichmäßig reduzierten Querschnittes und der Abwinklung. Diese können durch eine einzige Bearbeitung erzeugt werden.

Gemäß einer Ausgestaltung ist der ungleichmäßig geschwächte Querschnitt und/oder die Abwinklung in der Nähe eines Endes des Schaftes ausgebildet, mit dem das Befestigungsmittel in Material eintreibbar ist. Hierdurch ist eine besonders große Auslenkung des Schaftes erreichbar.

Gemäß einer weiteren Ausgestaltung weist das eintreibbare Ende des Schaftes einen Anschnitt auf, um das Eindringen in das Material zu erleichtern. Bei dem Anschnitt kann es sich insbesondere um einen Meißelanschnitt oder um einen anderen Anschnitt handeln, der weniger aufwendig in der Herstellung als der Sägeanschnitt ist.

Gemäß einer Ausgestaltung ist das eintreibbare Ende des Schaftes gestanzt. Durch Stanzen kann in einer einzigen Bearbeitung der Schaft von einem Endlosmaterial abgelängt und am eintreibbaren Ende mit einem Anschnitt versehen werden. Auch dies begünstigt die Produktivität.

Gemäß einer Ausgestaltung ist das Befestigungsmittel eine Klammer mit einer Basis und zwei Schenkeln, von denen mindestens ein Schenkel als Schaft ausgebildet ist, d.h. mindestens einen Schaftbereich mit gegenüber den Querschnitten der beiden angrenzenden Schaftbereiche ungleichmäßig geschwächtem Querschnitt aufweist. Vorzugsweise sind beide Schenkel der Klammer in der vorbeschriebenen Weise als Schaft ausgebildet, damit beide Schenkel einen Beitrag zur Steigerung des Ausziehwiderstandes leisten bzw. einen gewünschten Verlauf in einem Material einnehmen.

Bei einer Klammer können die Schwächungen des Querschnittes und/oder der Abwinklungen auf verschiedenen Seiten verschiedener Schenkel angeordnet sein. Gemäß einer Ausgestaltung sind die Schwächungen und/oder Abwinklungen auf entgegengesetzten Seiten der beiden Schenkel vorhanden, um diese in entgegengesetzter Richtung abzulenken. Gemäß einer anderen Ausgestaltung sind die Schwächungen und/oder Abwinklungen auf einander zugewandten Seiten vorhanden, um die Schenkel aufeinander zu zu lenken. Schließlich sind gemäß einer Ausgestaltung die Schwächungen und/oder Abwinklungen auf gleichgerichteten Seiten vorhanden, um beide Schenkel in dieselbe Richtung zu lenken. Letzteres ist beispielsweise für die Befestigung von Glasleisten von Interesse, wie in der DE 93 07 232 U1 beschrieben.

Gemäß einer anderen Ausgestaltung ist das Befestigungsmittel ein Nagel (z.B. Rundkopfnagel, T-Nagel oder Senkkopfnagel) oder ein Stift. Die Auslenkung des Schaftes von der Eintreibachse ist auch bei vielen Anwendungen von Nägeln und Stiften vorteilhaft.

Gemäß einer Ausgestaltung weist das Befestigungsmittel eine Vielzahl zu einem Stab zusammengefaßter Klammern, Nägel oder Stifte auf. Die Zusammenfassung zu einem Stab bietet weitere Vorteile hinsichtlich der Produktion und der Anwendung, insbesondere der Verarbeitung mittels Nagelgeräten, die Magazine zur Aufnahme von Stäben aufweisen. Gemäß einer weiteren Ausgestaltung sind die Klammern, Nägel oder Stifte des Stabes durch ein Klebemittel zusammengehalten.

Hinsichtlich des Verfahrens wird die Aufgabe durch ein Verfahren mit den Merkmalen des Anspruches 16 gelöst. Vorteilhafte Ausgestaltungen des Verfahrens sind in den Unteransprüchen angegeben.

Das erfindungsgemäße Verfahren zum Herstellen eines Befestigungsmittel umfaßt die folgenden Schritte:
- ein Bandmaterial wird bereitgestellt, das parallele, in Laufrichtung des Bandmaterials ausgerichtete Drähte umfaßt,
- das Bandmaterial wird quer zur Laufrichtung in Platten geteilt und
- das Bandmaterial oder die Platten wird/werden auf mindestens einer Seite mit quer über die Drähte oder Drahtabschnitte verlaufenden Schwächungen des Querschnittes versehen und
- das Bandmaterial oder die Platten wird/werden mit mindestens einer quer zu den Drähten oder Drahtabschnitten verlaufenden Abwinklung versehen.

In dem Bandmaterial sind die in Laufrichtung gerichteten Drähte bereits zusammengefaßt, vorzugsweise durch Kleben. Die Stäbe können dann durch einfaches Ablängen des Bandmaterials quer zu dessen Laufrichtung hergestellt werden. Die dabei entstehenden Platten können beispielsweise direkt als Stifte oder Nägel umfassende Stäbe genutzt werden. Vor oder nach dem Zerteilen des Bandmaterials in Platten werden auf mindestens einer Seite über die Drähte des Bandmaterials oder die Drahtabschnitte der Platten verlaufende Schwächungen des Querschnittes eingebracht. Zusätzlich oder statt dessen wird das Bandmaterial oder werden die Platten mit mindestens einer quer zu den Drähten oder Drahtabschnitten verlaufenden Abwinklung versehen. Da die Schwächungen und/oder Abwinklungen zugleich in eine Vielzahl Drähte oder Drahtabschnitte eingebracht werden, wird eine weitere Vereinfachung und Steigerung der Geschwindigkeit des Produktionsprozesses erreicht.

Gemäß einer Ausgestaltung werden die Platten zu einem U-förmigen Stab aus einer Vielzahl parallel angeordneter, U-förmiger Klammern gebogen, von denen jede aus einem Drahtabschnitt besteht. Durch einen einfachen weiteren Schritt, der sich auf eine Vielzahl von Drahtabschnitten und Klammern bezieht, wird also ein Klammerstab fertiggestellt.

Gemäß einer weiteren Ausgestaltung werden die Platten in einem Stanzverfahren von dem Bandmaterial getrennt. Das Stanzverfahren, das mit entgegengesetzt gerichteten Schneiden arbeitet, ist zwar zur Herstellung stark angewinkelter Sägeanschnitte wenig geeignet, wohl aber zur Herstellung von Anschnitten mit einem verhältnismäßig geringen Neigungswinkel, die das Durchdringen des Materials verbessern. Außerdem ist das Stanzverfahren für besonders hohe Produktionsgeschwindigkeit von Vorteil.

Gemäß einer Ausgestaltung werden die Querschnittsschwächungen eingeprägt und/oder werden die Abwinklungen durch Biegen erzeugt. Die Querschnittsschwächungen und die Abwinklungen können in einem einzigen Arbeitsschritt erzeugt werden, bei dem die Prägevorrichtung sowohl die Schwächungen des Querschnittes als auch die Biegung des Bandmaterials oder der Platten bewirkt. Vorzugsweise geschieht dies gleichzeitig mit dem Ablängen des Bandmaterials in Platten in derselben Stanze bzw. Prägevorrichtung.

Gemäß einer weiteren Ausgestaltung werden in jede Platten zwei parallel verlaufende Schwächungen und/oder Abwinklungen des Querschnittes eingebracht, um Klammern zu erzeugen, die zwei seitlich verlaufende Schenkel aufweisen.

Schließlich werden gemäß einer Ausgestaltung die Querschnittsschwächungen und/oder Abwinklungen in der Nähe mindestens eines Endes der Drahtabschnitte der Platten eingebracht, um eine möglichst große Auslenkung des Schaftes zu erzielen.

Die Erfindung wird nachfolgend anhand der anliegenden Zeichnungen eines Ausführungsbeispieles näher erläutert. In den Zeichnungen zeigen:
- Fig. 1: eine Klammer in einer vergrößerten Seitenansicht;
- Fig. 2: dieselbe Klammer in einem vergrößerten Querschnitt in der Linie A-A der Fig. 1;
- Fig. 3: vergrößerte Einzelheit X der Fig. 1;
- Fig. 4: eine aus Klammern gemäß Fig. 1 bis 3 gebildeter Klammerstab in Seitenansicht;
- Fig. 5: derselbe Klammerstab in der Draufsicht.

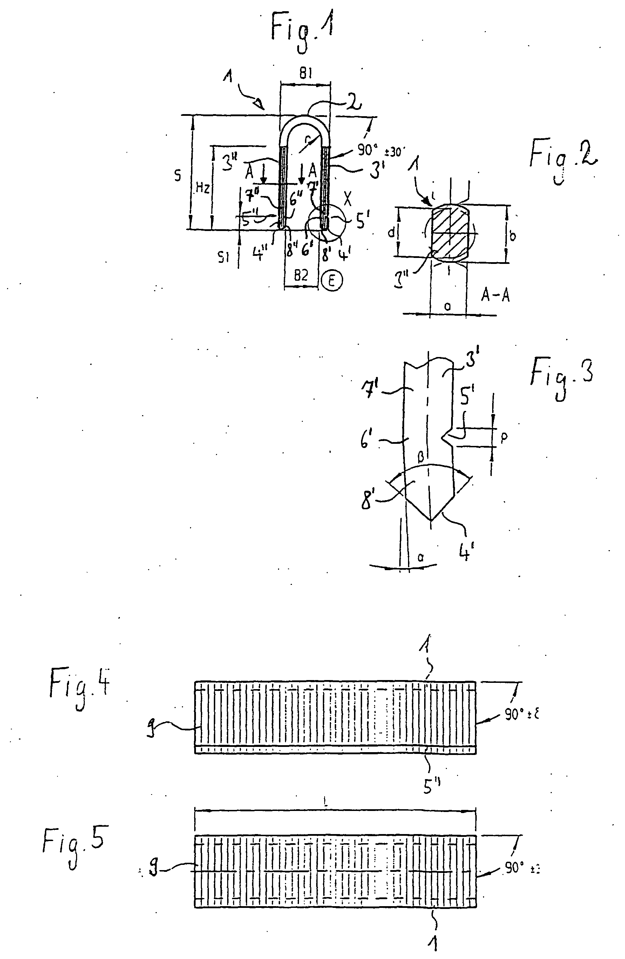

Gemäß Fig. 1 bis 3 hat eine Klammer 1 eine Basis 2 mit zwei davon parallel vorstehenden, im wesentlichen geraden Schäften bzw. Schenkeln 3', 3".

Im Beispiel hat die Basis 2 einen Biegeradius r, um im Rahmen einer speziellen Anwendung Draht auf Holz zu befestigen. Im Rahmen anderer Anwendungen kann die Basis 2 auch anders ausgeführt sein, insbesondere geradlinig.

Gemäß Fig. 2 ist die Klammer 1 aus einem Flachdraht gebogen.

Die Schenkel 3', 3" haben an ihren freien Enden 4', 4" jeweils einen Meißelanschnitt, der symmetrisch ist und einen Meißelwinkel β aufweist.

Des weiteren haben die Schenkel 3', 3" auf den voneinander abgewandten Außenseiten Einprägungen 5', 5", die im wesentlichen V-förmig sind und sich nach außen öffnen. Die Öffnungsweite p entspricht etwa der Länge der Schenkel der Einprägungen 5', 5".

Die Einprägungen 5', 5" befinden sich in einem Abstand S1 von den Enden 4', 4", genauer gesagt, von den Spitzen der Meißelanschnitte. Dort haben die Schenkel 3', 3" einen Schaftbereich 6', 6" mit gegenüber den angrenzenden Schaftbereichen 7',8',7",8" reduziertem Querschnitt.

Ferner sind die Abschnitte der Schenkel 3', 3" an den Enden 4', 4" bis zu den Einprägungen 5', 5" leicht um einen Winkel α nach außen abgewinkelt. Die Abwinklungen sind mit den Bezugsziffern 8', 8" bezeichnet. Ein Ausführungsbeispiel weist folgende Daten auf:
Dicke des gewalzten Drahtes a = 1,44 mm
Breite des gewalzten Drahtes b = 1,57 mm
Biegeradius r = 3,225 mm
Höhe der Prägung S 1 = 2,5 mm
Meißelwinkel β = 90°
Biegewinkel der Abwinklung α = 1°
Breite der Prägung p = 0,6 mm
Klammerhöhe S = 19 mm
äußere Rückenbreite B1 = 9,3 mm
innere Rückenbreite B2 = 6,45 mm.

Beim Eintreiben der Klammer 1 werden infolge der Einprägungen 5', 5" unterstützt durch die Abwinklungen 8', 8" in Endnähe die Schenkel 3', 3" in der Zeichenebene nach außen abgelenkt.

Hierdurch wird der Ausziehwiderstand stark erhöht.

Gemäß Fig. 4 und 5 sind eine Vielzahl Klammern 1 zu einem Stab 9 zusammengefaßt. Sie werden durch ein Klebemittel so zusammengehalten, daß ein Eintreibgerät einzelne Klammern 1 vom Stab abscheren kann, um diese in ein Material einzutreiben.

Im Beispiel sind siebzig Klammern 1 zu einem Stab 9 mit einer Länge L von etwa 74 mm zusammengefaßt.

## Patentansprüche

1. Befestigungsmittel mit mindestens einem Schaft (3) mit einem in ein Material eintreibbaren Ende (4) und mindestens einem Schaftbereich mit gegenüber den Querschnitten der beiden angrenzenden Schaftbereiche (7, 8) ungleichmäßig geschwächtem Querschnitt, **dadurch gekennzeichnet, daß** der Schaft (3) eine Abwinklung (8) aufweist.

2. Befestigungsmittel nach Anspruch 1, bei dem der ungleichmäßig geschwächte Querschnitt ein gegenüber den Querschnitten der beiden angrenzenden Schaftbereiche ungleichmäßig reduzierter Querschnitt ist.

3. Befestigungsmittel nach Anspruch 2, bei dem der Querschnitt durch eine Einprägung (5) in nur eine Seite des Schaftes (3) reduziert ist.

4. Befestigungsmittel nach einem der Ansprüche 1 bis 3, bei dem die Abwinklung (8) einen Winkel (α) von 1° bis 7° aufweist.

5. Befestigungsmittel nach Anspruch 4, bei dem die Abwinklung (8) einen Winkel (α) von 3° bis 5° aufweist.

6. Befestigungsmittel nach einem der Ansprüche 1 bis 5, bei dem die Abwinklung (8) von dem Schaftbereich (6) mit ungleichmäßig reduziertem Querschnitt ausgeht.

7. Befestigungsmittel nach einem der Ansprüche 1 bis 6, bei dem der Schaftbereich (6) mit ungleichmäßig geschwächtem Querschnitt und/oder die Abwinklung (8) in der Nähe des eintreibbaren Endes (4) des Schaftes (3) ausgebildet ist.

8. Befestigungsmittel nach einem der Ansprüche 1 bis 7, bei dem das eintreibbare Ende (4) des Schaftes (3) einen Anschnitt aufweist.

9. Befestigungsmittel nach einem der Ansprüche 1 bis 8, bei dem das eintreibbare Ende (4) des Schaftes (3) gestanzt ist.

10. Befestigungsmittel nach einem der Ansprüche 1 bis 9, das mindestens eine Klammer (1) mit einer Basis (2) und zwei Schenkeln (3) aufweist, von denen mindestens ein Schenkel (3) als Schaft ausgebildet ist.

11. Befestigungsmittel nach Anspruch 10, bei dem beide Schenkel (3) als Schaft ausgebildet sind.

12. Befestigungsmittel nach Anspruch 11, bei dem beide Schenkel (3) auf entgegengesetzt oder aufeinander zu oder auf gleichgerichteten Seiten eine Schwächung (5) des Querschnittes und/oder eine Abwinklung (8) aufweisen.

13. Befestigungsmittel nach einem der Ansprüche 1 bis 9, das ein Nagel oder ein Stift ist.

14. Befestigungsmittel nach einem der Ansprüche 10 bis 13, das eine Vielzahl zu einem Stab (9) zusammengefaßter Klammern (1), Nägel oder Stifte aufweist.

15. Befestigungsmittel nach Anspruch 14, bei dem die Klammern (1), Nägel oder Stifte des Stabes (9) durch ein Klebemittel zusammengehalten sind.

16. Verfahren zum Herstellen eines Befestigungsmittels nach einem der Ansprüche 1 bis 15, bei dem
- ein Bandmaterial bereitgestellt wird, das parallele, in Laufrichtung des Bandmaterials ausgerichtete Drähte umfaßt,
- das Bandmaterial quer zur Laufrichtung in Platten geteilt wird und
- das Bandmaterial oder die Platten auf mindestens einer Seite mit quer über die Drähte oder Drahtabschnitte verlaufenden Schwächungen des Querschnittes versehen wird/werden und
- das Bandmaterial oder die Platten mit mindestens einer quer zu den Drähten oder Drahtabschnitten verlaufenden Abwinklung (8) versehen wird/werden.

17. Verfahren nach Anspruch 16, bei dem die Platten zu einem U-förmigen Stab (6) aus einer Vielzahl parallel angeordneter, U-förmiger Klammern (1) gebogen werden, von denen jede aus einem Drahtabschnitt besteht.

18. Verfahren nach Anspruch 16 oder 17, bei dem die Platten in einem Stanzverfahren von dem Bandmaterial getrennt werden.

19. Verfahren nach einem der Ansprüche 16 bis 18, bei dem die Schwächungen (5) des Querschnittes eingeprägt und/oder die Abwinklungen (8) durch Biegen erzeugt werden.

20. Verfahren nach einem der Ansprüche 16 bis 19, bei dem in jede Platte zwei parallel verlaufende Schwächungen (5) und/oder Abwinklungen (8) des Querschnittes eingebracht werden.

21. Verfahren nach einem der Ansprüche 16 bis 20, bei dem die Schwächungen (5) und/oder Abwinklungen (8) des Querschnittes nahe mindestens eines Endes der Drahtabschnitte der Platten eingebracht werden.

## Claims

1. A fastening means comprising at least one shank (3) with an end (4) adapted to be driven into a material, and at least one shank area of a cross-section irregularly weakened with respect to the cross-sections of the two adjoining shank areas (7, 8), **characterized in that** the shank (3) has an angled portion (8).

2. The fastening means according to claim 1 wherein the cross-section irregularly weakened with respect to the cross-sections of the two adjoining shank areas is an irregularly reduced cross-section.

3. The fastening means according to claim 2 wherein the cross-section is reduced by means of an impression (5) made into only one side of the shank (3).

4. The fastening means according to any one of claims 1 to 3 wherein the angled portion (8) has an angle (α) of from 1° to 7°.

5. The fastening means according to claim 4 wherein the angled portion (8) has an angle (α) of from 3° to 5°.

6. The fastening means according to any one of claims 1 to 5 wherein the angled portion (8) extends from the shank area (6) of an irregularly reduced cross-section.

7. The fastening means according to any one of claims 1 to 6 wherein the shank area (6) of an irregularly weakened cross-section and/or the angled portion (8) are formed near the drive-in end (4) of the shank (3).

8. The fastening means according to any one of claims 1 to 7 wherein the drive-in end (4) of the shank (3) has a chamfer.

9. The fastening means according to any one of claims 1 to 8 wherein the drive-in end (4) of the shank (3) is blanked.

10. The fastening means according to any one of claims 1 to 9 which has at least one clamp (1) with a base (2) and two legs (3) at least one leg (3) of which is formed as a shaft.

11. The fastening means according to claim 10 wherein both of the legs (3) are formed as a shank.

12. The fastening means according to claim 11 wherein both of the legs (3) have their cross-sections weakened (5) and/or have an angled portion (8) on sides which oppose each other or face each other or are equally directed.

13. The fastening means according to any one of claims 1 to 9 which is a nail or pin.

14. The fastening means according to any one of claims 10 to 14 which has a multiplicity of clamps (1), nails or pins combined into a bar (9).

15. The fastening means according to claim 14 wherein the clamps (1), nails or pins of the bar (9) are held together by an adhesive.

16. A method for the manufacture of a fastening means according to any one of claims 1 to 15 wherein
a strap material is provided which comprises parallel wires aligned in the direction of extent of the strap material,
- the strap material is partitioned into panels crosswise to the direction of extent, and
- the strap material or the panels is/are provided with weakenings of the cross-section which extend transversely across the wires or wire portions on at least one side, and
- the strap material or the panels is/are provided with at least one angled portion (8) extending crosswise to the wires or wire portions.

17. The process according to claim 16 wherein the panels are bent into a U-shaped bar (6) made from a multiplicity of parallel-disposed, U-shaped clamps (1) each of which consists of a wire portion.

18. The process according to claim 16 or 17 wherein the panels are cut from the strap material by a blanking process.

19. A method according to any one of claims 16 to 18 wherein the weakenings (5) of the cross-section are impressed and/or the angled portions (8) are produced by bending.

20. A method according to any one of claims 16 to 19 wherein two parallel-extending weakenings (5) and/or angled portions (8) of the cross-section are introduced into each panel.

21. A method according to any one of claims 16 to 20 wherein the weakenings (5) and/or angled portions (8) of the cross-section are introduced near at least one end of the wire portions of the panels.

## Revendications

1. Dispositif de fixation avec au moins une tige (3) dotée d'une extrémité (4) pouvant s'enfoncer dans un matériau et au moins une zone de tige avec une section transversale affaiblie de manière inégale par rapport aux sections transversales des deux zones de tige adjacentes (7, 8), **caractérisé en ce que** la tige (3) comporte une pliure (8).

2. Dispositif de fixation selon la revendication 1, dans lequel la section transversale affaiblie de manière inégale est une section transversale réduite inégalement par rapport aux sections transversales des deux zones de tige adjacentes.

3. Dispositif de fixation selon la revendication 2, dans lequel la section transversale est réduite par une empreinte (5) sur un seul côté de la tige (3).

4. Dispositif de fixation selon l'une des revendications 1 à 3, dans lequel la pliure (8) comporte un angle (α) de 1 ° à 7°.

5. Dispositif de fixation selon la revendication 4, dans lequel la pliure (8) comporte un angle (α) de 3° à 5°.

6. Dispositif de fixation selon l'une des revendications 1 à 5, dans lequel la pliure (8) part de la zone de tige (6) avec une section transversale réduite de manière inégale.

7. Dispositif de fixation selon l'une des revendications 1 à 6, dans lequel la zone de tige (6) est formée avec une section transversale affaiblie de manière inégale et/ou la pliure (8) est formée à proximité de l'extrémité (4) de la tige (3) pouvant s'enfoncer.

8. Dispositif de fixation selon l'une des revendications 1 à 7, dans lequel l'extrémité (4) de la tige (3) pouvant s'enfoncer comporte un chanfrein d'entrée.

9. Dispositif de fixation selon l'une des revendications 1 à 8, dans lequel l'extrémité (4) de la tige (3) pouvant s'enfoncer est découpée.

10. Dispositif de fixation selon l'une des revendications 1 à 9, qui comporte au moins une agrafe (1) avec une base (2) et deux branches (3), dont une branche (3) au moins est formée comme tige.

11. Dispositif de fixation selon la revendication 10, dans lequel les deux branches (3) sont formées comme tiges.

12. Dispositif de fixation selon la revendication 11, dans lequel les deux branches (3) comportent sur les côtés opposés ou tournés l'un vers l'autre ou orientés dans le même sens un affaiblissement (5) de la section transversale et/ou une pliure (8).

13. Dispositif de fixation selon l'une des revendications 1 à 9, qui est un clou ou une pointe.

14. Dispositif de fixation selon l'une des revendications 10 à 13, qui comporte une multitude d'agrafes (1), de clous ou de pointes réunis en une barre (9).

15. Dispositif de fixation selon la revendication 14, dans lequel les agrafes (1), les clous ou pointes de la barre (9) sont tenus ensemble par un adhésif.

16. Procédé de fabrication d'un dispositif de fixation selon l'une des revendications 1 à 15, dans lequel
- un matériau en bande est préparé, qui comprend des fils métalliques parallèles orientés dans le sens de marche du matériau en bande,
- le matériau en bande est divisé en plaques perpendiculairement au sens de marche et
- le matériau en bande ou les plaques est/sont pourvu(es) sur au moins une face d'affaiblissements de la section transversale passant transversalement sur les fils métalliques ou sur les segments de fils métalliques et
- le matériau en bande ou les plaques est/sont pourvu(es) d'une pliure (8) perpendiculaire aux fils métalliques ou aux segments de fils métalliques.

17. Procédé selon la revendication 16, dans lequel les plaques sont pliées en une barre en forme de U (6) constituée d'une multitude d'agrafes (1) parallèles en forme de U, chacune d'entre elles se composant d'un segment de fil métallique.

18. Procédé selon la revendication 16 ou 17, dans lequel les plaques sont séparées du matériau en bande lors d'un procédé de découpage.

19. Procédé selon l'une des revendications 16 à 18, dans lequel les affaiblissements (5) de la section transversale sont empreints et/ou les pliures (8) sont générées par pliage.

20. Procédé selon l'une des revendications 16 à 19, dans lequel deux affaiblissements parallèles (5) et/ou pliures (8) de la section transversale sont mis en oeuvre dans chaque plaque.

21. Procédé selon l'une des revendications 16 à 20, dans lequel les affaiblissements (5) et/ou pliures (8) de la section transversale sont mis en oeuvre à proximité d'au moins une extrémité des segments de fils métalliques des plaques.
